# DEMANDE DE BREVET EUROPEEN

(11) **EP 1 156 637 A1**
(43) Date de publication de la demande: **21.11.2001**
(21) Numéro de dépôt: 01401164.7
(22) Date de dépôt: 04.05.2001
(51) Int. Cl.: H04L 29/06, H04L 12/56

(54) **Routeur informatique multi-protocoles**

(30) Priorité: 19.05.2000 FR 0006456
(71) Demandeur: Airsys ATM S.A., 92220 Bagneux (FR)
(72) Inventeur: Baretzki, Laurent, Thomson-CSF Prop. Intel., 94117 Arcueil Cedex (FR)
(74) Mandataire: Lucas, Laurent Jacques

(57) **Abrégé**

La présente invention concerne un routeur informatique susceptible de gérer une multitude de protocoles de communications différents.

Le routeur communiquant avec des systèmes par des liaisons série, il comporte au moins :
- un programme de routage générique (23) ;
- un programme API (21) d'intefaçage de premier niveau, commun avec les systèmes ;
- un programme API (22) d'interfaçage de second niveau, commun avec les liaisons série ;

le programme de routage générique dialoguant avec le programme API (21) de premier niveau, ce dernier dialoguant avec le programme API (22) de second niveau.

L'invention s'applique notamment pour le traitement des informations de gestion de trafic aérien.

## Description

La présente invention concerne un routeur informatique susceptible de gérer une multitude de protocoles de communications différents. L'invention s'applique notamment pour le traitement des informations de gestion de trafic aérien.

La densité de trafic aérien a atteint un niveau très important. Par ailleurs, les exigences de sécurité aériennes sont toujours de plus en plus accrues. Une conséquence de cette situation est que la gestion du trafic aérien doit traiter un grand nombre d'informations, destinées notamment aux contrôleurs aériens et aux pilotes d'avions. Ces informations sont en particulier relatives à une large catégorie de données radar, à des situations météorologiques, à des plans de vol ou encore à des données de type ILS concernant les systèmes d'atterrissage.

Le traitement de ces informations ne peut se faire que par des moyens informatiques puissants. Parmi ces moyens, un rôle essentiel est joué par les moyens d'interfaçage des différents centres d'informations ou de décisions. Ces moyens d'interfaçage ont notamment une fonction de routage des informations, ils ont donc notamment une fonction d'aiguillage des données vers les bons centres de destination. Etant donnés les flots très importants de données en jeu, ces moyens ont un rôle essentiel pour le bon fonctionnement global d'un système de gestion du trafic aérien. Les données traitées sont notamment les données radar et autres données relatives à la situation de vol des avions, telles que par exemple des plans de vol ou informations météorologiques.

Il existe des matériels connus et notamment disponibles dans le commerce, équipés de leurs systèmes d'exploitation, qui permettent de répondre à ces besoins de routage. A titre d'exemple, on peut citer une gamme de produits connus par la marque déposée LINES issue de l'expression anglo-saxonne « Link Interface Node for External Systems ». Ces produits, de type modulaire, sont conçus pour permettre le routage et le traitement de messages d'entrées/sorties parmi des lignes séries entrantes ou sortantes et Ethernet. Les lignes série standards telles que par exemple X25, HDLC ou BSC sont traitées aussi bien que des lignes dédiées, telles que par exemple des protocoles de transmissions d'informations radar particuliers.

Ces routeurs peuvent fonctionner avec une architecture logicielle de type à processeur frontal. Ils sont équipés d'un logiciel de type FPBSS, ce dernier terme étant issu de l'expression anglo-saxonne « Front Processor Basic System Software ». Dans ce mode de réalisation, le routeur est relié à un seul programme d'application. Il n'a qu'une fonction amont, par exemple l'aiguillage des données vers la bonne destination. Tout le coeur de l'applicatif est dans un ou plusieurs calculateurs centraux. En d'autres termes, il faut autant de routeurs que d'applicatifs.

Une utilisation plus performante de ces routeurs peut se faire selon un mode de communication ouvert, dit encore OCP selon l'expression « Open Communication Processor ». Dans ce mode, un routeur est relié à plusieurs applications et fonctionne sensiblement comme un serveur de données. Il permet notamment d'aiguiller et de traiter les données depuis n'importe quel point d'entrée vers n'importe quel point de sortie. Ce mode de fonctionnement est particulièrement bien adapté à la gestion du trafic aérien. Dans une application de gestion du contrôle aérien, ce mode permet en effet notamment les fonctionnalités suivantes, c'est-à-dire :
- une distribution du type boîte noire des données radar vers les centres, les données radar étant reçues par des interfaces séries et transmises via un réseau local, par exemple Ethernet, vers un groupe de machines identifiées, diffusion encore appelée UDP multicast dans la littérature anglo-saxonne ;
- une conversion autonome de messages ou protocoles, permettant notamment la conversion de format de message ou protocoles spécifiques, ainsi par exemple ISR2 en ASTERIX, X25 en HDLC-UI... ;
- une fonction de contrôle de ligne dans les systèmes radar, c'est-à-dire la transmission de données radar par des lignes séries vers les circuits de traitement.

Parmi tous les types de lignes série qui constituent une bibliothèque de protocoles de communications, différents types d'interfaces logicielles et donc de services existent. Un programme d'interfaçage spécifique encore appelé API, selon l'expression anglo-saxonne « Application Programming Interface » peut assurer un interfaçage commun pour accéder à n'importe quelle entrée ou sortie, qu'elle soit du type liaison série ou Ethernet. Cet applicatif lance notamment des demandes pour initialiser ou configurer les entrées/sorties, par exemple pour initialiser une connexion TCP/IP ou une connexion X25, et pour transmettre ou réceptionner des messages vers ou depuis les entrées/sorties selon un programme de routage prédéfini. Ainsi, il ne devrait pas être nécessaire de développer un programme d'interfaçage particulier chaque fois qu'une nouvelle interface doit être implantée. Le programme API est par exemple implanté dans une couche logicielle intermédiaire, ou « middleware », superposée au noyau central ou système d'exploitation du routeur.

En fait, notamment dans une application de gestion de trafic aérien, il y a pléthore de protocoles de communications possibles qui fonctionnent tous de manières différentes. Cela est dû notamment, mais non exclusivement, à la multitude de types de radars auxquels un routeur peut être interfacé. Le programme API ci-dessus n'est alors plus capable de gérer tous les types d'interfaçages possibles. Il est alors possible de développer des programmes API pour chaque nouveau type d'interface, mais une telle solution n'est pas économique. Elle manque par ailleurs de fiabilité et complique la maintenance des systèmes.

Un but de l'invention est de pallier les inconvénients précités en permettant notamment la réalisation d'un routeur capable de gérer une multitude de types d'interfaces de façon économique. A cet effet, l'invention a pour objet un routeur informatique communiquant avec des systèmes par des liaisons série, comportant au moins :
- un programme de routage générique ;
- un programme API d'interfaçage de premier niveau, commun avec les systèmes ;
- un programme API d'interfaçage de second niveau, commun avec les liaisons série.

Le programme de routage générique dialogue avec le programme API (24) de premier niveau, ce dernier dialoguant avec le programme API (22) de second niveau.

L'invention a pour principaux avantages qu'elle améliore la fiabilité d'un routeur, qu'elle en facilite sa maintenance et qu'elle s'adapte à de nombreux types d'applications.

D'autres caractéristiques et avantages de l'invention apparaîtront à l'aide de la description qui suit faite en regard de dessins annexés qui représentent :
- la figure 1, un exemple d'architecture logicielle d'un routeur ;
- la figure 2, un exemple d'architecture logicielle d'un routeur selon l'invention.

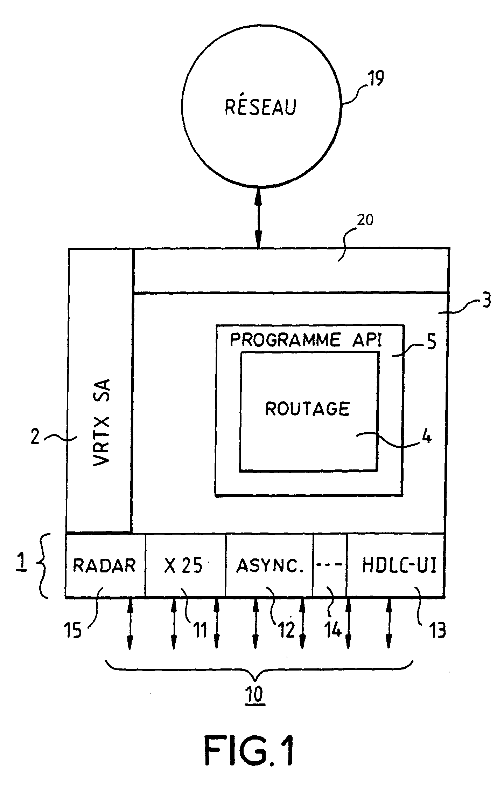

La figure 1 présente un exemple d'architecture logicielle d'un routeur, relatif notamment à la gestion des entrées ou sorties de liaisons séries. La couche logicielle inférieure 1 exécute les protocoles de communication des différentes liaisons série 10 entrant et/ou sortant du routeur. A titre d'exemple, cette couche logicielle 1 comporte des programmes de protocoles de type FPBSS, c'est-à-dire notamment un protocole de communication 11 de liaison X25, un protocole de communication 12 d'une liaison asynchrone, un protocole de communication 13 d'une liaison HDLC-UI, d'autres types de protocoles 14 dont un ou plusieurs protocoles spécifiques 15 à une application donnée, par exemple une liaison radar particulière. Une couche logicielle 20 exécute par exemple des protocoles de communication avec un réseau 19, par exemple du type Ethernet ou Internet.

Le routeur comporte un système d'exploitation 2, par exemple du type VRTX SA, interagissant avec les différentes couches logicielles. Une couche logicielle intermédiaire 3, appelée dans la littérature anglo-saxonne « middleware », est ajoutée au système d'exploitation 2 pour fournir notamment des services tels que des communications inter-tâches, des gestions de temps ou des gestions de ressources. A cet effet, une bibliothèque de programmes de services, non représentée, est implantée à l'intérieur de la couche intermédiaire. Cette couche intermédiaire 3 fait le lien entre les couches logicielles d'entrées/sorties 1, 20, le système d'exploitation 2 et l'applicatif 4, en l'occurrence le programme de routage. Un programme API spécifique 5 implanté dans la couche logicielle intermédiaire assure un interfaçage commun pour accéder à toutes les entrées/sorties, série 10 ou réseau 20. Comme il a été vu précédemment, il peut exister une multitude de type de protocoles de communications série. Le programme API 5 d'interfaçage commun ne peut répondre à toutes ces possibilités. Si l'on conserve une architecture telle que celle de la figure 1, il est alors nécessaire d'adapter en permanence le programme API, ce qui n'est pas économique. Cela complique aussi la maintenance des systèmes, car le nombre de versions de routeurs est accru. La fiabilité d'ensemble s'en trouve par ailleurs affectée.

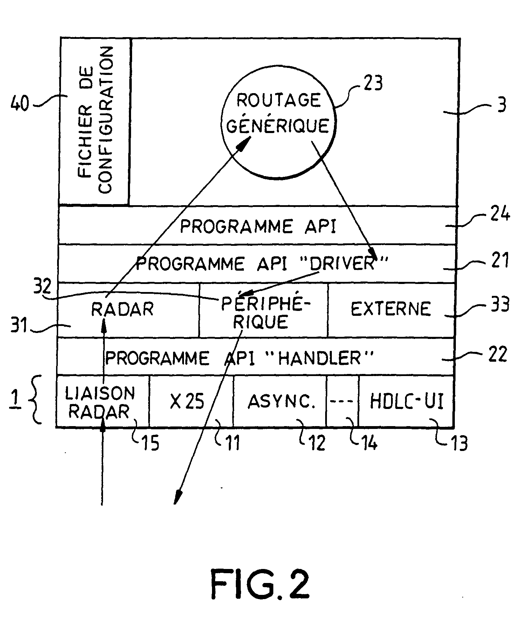

La figure 2 présente un exemple d'architecture logicielle d'un routeur selon l'invention. Pour des raisons de simplification de représentation, le programme d'exploitation 2 ainsi que les couches de protocole de communication réseau n'ont pas été représentées. La couche logicielle inférieure 1 comporte les interfaces dédiées aux différents types d'entrées et sorties utilisées. Les protocoles de communications 11, 12, 13, 14, 15 sont par exemple les mêmes que ceux de la figure 1. D'autres protocoles peuvent bien sûr être utilisés.

Parmi tous les types de lignes série qui constituent une bibliothèque de protocoles de communications, différents types d'interfaces logicielles et donc de services existent. L'invention utilise le fait que dans un routeur, une interface est configurée à deux niveaux. Un premier niveau, qualifié de « driver » dans la littérature anglo-saxonne, traite du pilotage et du contrôle des communications avec d'autres systèmes émettant des données vers le routeur et/ou recevant des données du routeur. Dans le cas d'une application de gestion de trafic aérien, ces systèmes sont par exemple des systèmes radar, des appareils périphériques ou encore des centres de surveillance et de contrôle. Le premier niveau concerne alors par exemple des programmes d'interface 31, 32, 33 tels que ceux définis comme suit :
- interfaces radar 31 avec :
   - une supervision des données de réception, pour avertir notamment un système extérieur de gestion que les données ne sont plus reçues ;
   - un traitement intégral, c'est-à-dire contrôle de lignes et réception des données, ou simplement un contrôle d'aptitude à fonctionner, par exemple lorsque deux radars redondants sont activés, seulement un seul des deux est opérationnel, le second est alors contrôlé pour permettre une commutation de ligne du premier vers le second en cas de défaut du premier.
- Interfaces 32 avec des appareils ou périphériques, par exemple une imprimante ou un écran, avec :
   - une interrogation d'un équipement externe pour vérifier qu'il est toujours en état de marche et pour connaître son état réel, par exemple dans le cas d'une imprimante pour savoir s'il y a assez de papier ou assez d'encre ;
   - une émission et une réception de messages avec un accusé de réception possible et ré-émission en cas d'erreur.
- interfaces externes 33, différents des précédents, par exemple des liaisons de données météorologiques ou de plan de vol.

Un deuxième niveau, qui peut être qualifié de « handler » dans la littérature anglo-saxonne, traite les types de liaisons série du routeur, selon notamment le fait que ces liaisons soient synchrones ou asynchrones.

Un routeur selon l'invention comporte donc un programme API d'interfaçage commun 21, 22 pour chaque niveau d'interface, en vue de couvrir le plus grand nombre de situations possibles. En d'autres termes, il comporte un programme API 21 commun pour tous les systèmes avec qui il communique et il comporte un programme API 22 commun pour toutes les liaisons séries et protocoles associés 11, 12, 13, 14, 15, présents sur ses ports. La couche logicielle de premier niveau 21, appelée précédemment « driver », pilote et contrôle les systèmes en communication avec le routeur. Elle exécute donc par exemple des protocoles d'interface radar 31, des protocoles d'interface 32 avec des appareils ou périphériques et des protocoles d'interface externes 33, selon le type de système en communication. Ainsi, cette couche logicielle 21 exécute par exemple des tâches du type de celle définies pour ce niveau, c'est-à-dire notamment une supervision des données de réception, un traitement intégral, comprenant un contrôle de lignes et une réception des données, ou encore un contrôle d'aptitude à fonctionner en ce qui concerne les programmes d'interfaces radar 31. Cette couche API exécute encore des gestions de messages d'interrogation, de validation et/ou vérification en ce qui concerne les programmes d'interfaces 32 avec des appareils ou périphériques, tels que des imprimantes ou des écrans. Enfin, elle exécute des programmes d'interface 33 avec des équipements externes, du type par exemple liaisons de données de plan de vol ou de données météorologiques. Cette couche logicielle API 21 de premier niveau est donc commune à tous les types de systèmes en communication avec le routeur, ces systèmes étant par exemple des systèmes radar, des appareils périphériques tels que des imprimantes ou des écrans, ou des systèmes de surveillance et de contrôles fournissant notamment des plans de vol ou des données météorologiques. D'autres types de systèmes sont bien sûr possibles.

La couche logicielle API de second niveau 22, appelée précédemment « handler », exécute les tâches propres au type de liaison série, selon notamment qu'elle est synchrone ou asynchrone. Elle exécute notamment les protocoles de communication 11, 12, 13, 14, 15 des différentes liaisons série 10. Cette couche logicielle API 22 est donc commune à toutes les entrées/sorties série du routeur, et à leurs protocoles de communication associés.

Le routeur comporte un programme de routage générique 23 qui dialogue par exemple avec un programme API 24 implémenté dans la couche logicielle intermédiaire 3. Cet applicatif 23 ne dialogue pas directement avec les couches logicielles inférieures, notamment les programmes API 21, 22 de gestion des entrées et sorties série définie précédemment. C'est le programme API 24 qui dialogue avec le programme API « driver » 21 de premier niveau.

Pour chaque liaison série ou ligne physique 10 d'entrée ou de sortie, un ensemble de paramètres communs à toutes les lignes doit être défini. Parmi ces paramètres, figurent par exemple la vitesse de ligne et le mode électrique. Par ailleurs, un des paramètres de cet ensemble décrit le type de programme 11, 12, 13, 14, 15 que doit effectuer le programme API 22 de second niveau, dit « handler ». De même, il existe pour chaque système au moins un paramètre décrivant le type de programme 31, 32, 33 que doit effectuer le programme API 21 de premier niveau, dit « driver ». A chaque type de programme correspond un pointeur qui pointe dans une mémoire la liste des paramètres de configuration dédiés à la ligne, tels que par exemple la fenêtre X25 ou les caractères de synchronisation BSC, ou dédiés au système. Les pointeurs et les paramètres de configuration de toutes les lignes séries sont par exemple stockés dans un fichier de configuration 40.

Les programmes API 21, 22 exécutent ainsi par exemple les services suivant, pour chaque ligne 10 :
- activation de la ligne, par le démarrage notamment de la gestion des messages d'émission et de réception ;
- désactivation de la ligne par arrêt notamment des messages d'émission et de réception ;
- configuration de la ligne en fonction des paramètres propres à la ligne.

Le programme API 21 de premier niveau exécute en plus les services supplémentaires suivant :
- émission de message avec ou sans accusé de réception ;
- activation des messages de réception.

Ainsi, un programme d'interfaçage API de gestion des lignes série existe comme étant basé sur une couche logicielle d'intefaçage API 21 de premier niveau commune à tous les types de systèmes communicant avec le routeur, elle-même basée sur une couche logicielle d'interfaçage API 22 de second niveau commune à tous les types d'entrées/sorties série du routeur. Ces deux couches API 21, 22 sont stables et permettent de couvrir un grand nombre de situations, en permettant de réaliser toutes les combinaisons entre programmes d'interfaçage de premier niveau et programmes d'interfaçages de second niveau. Un routeur selon l'invention est ainsi capable de gérer une multitude d'interfaces. Cela se fait de façon économique, car sans développements logiciels supplémentaires significatifs en cas d'évolution des liaisons. La fiabilité d'un routeur est aussi accrue de ce fait, et de même la maintenance est rendue plus facile.

A titre d'exemple, la figure 2 illustre le routage de données fournies par un système radar vers une imprimante, ce routage étant symbolisé par une succession de flèches. Un système radar, embarqué par exemple dans un avion, émet vers le routeur des données indiquant la position de l'avion. Ces données arrivent sur un port d'entrée série. Ces données sont reçues selon un protocole particulier 15, propre à la liaison radar en question. Le programme API de second niveau 22 fait exécuter alors le programme relatif à ce protocole de communication 15. Le programme API de premier niveau 21 fait exécuter le programme 31 de pilotage et de contrôle du système radar et de ses données. Ce programme est fonction du système radar en communication avec le routeur. Il est indépendant du type de liaison série reliant ce système au routeur. Il pourrait en particulier être combiné avec un autre protocole de communication que celui 15 utilisé dans cet exemple. Les données radar sont traitées par l'applicatif 23, c'est-à-dire le programme de routage générique, via le programme API 24 implémenté dans la couche intermédiaire 3. Le programme de routage générique 23 route ces données vers une imprimante. Le programme API de second niveau 22 fait alors exécuter le protocole de communication X25 propre à la liaison série reliant le routeur à l'imprimante alors que le programme API de premier niveau 21 fait exécuter le programme 32 de pilotage et de contrôle de l'imprimante. Ce programme interroge notamment l'imprimante pour vérifier qu'elle est en état de marche et pour connaître son état réel, par exemple pour savoir s'il y a assez de papier ou assez d'encre. Ce programme est indépendant du type de liaison série, notamment de la liaison X25 utilisée.

L'invention a été décrite pour une application de gestion du trafic aérien. Elle peut néanmoins être avantageusement utilisée pour d'autres types d'applications.

## Revendications

1. Routeur informatique communicant avec des systèmes par des liaisons série (10), **caractérisé en ce qu'**il comporte au moins :
- un programme de routage générique (23) ;
- un programme API (21) d'intefaçage de premier niveau, commun avec les systèmes ;
- un programme API (22) d'interfaçage de second niveau, commun avec les liaisons série ;
le programme de routage générique dialoguant avec le programme API (21) de premier niveau, ce dernier dialoguant avec le programme API (22) de second niveau.

2. Routeur selon la revendication 1, **caractérisé en ce que** le programme de routage générique (23) dialogue avec le programme API (21) de premier niveau par l'intermédiaire d'un programme API (24) implanté dans une couche logicielle intermédiaire (3).

3. Routeur selon l'une quelconque des revendications précédentes, **caractérisé en ce que** pour chaque liaison série (10) il existe au moins un paramètre décrivant le type de programme (11, 12, 13, 14, 15) que doit effectuer le programme API (22) de second niveau, à chaque type de programme correspond un pointeur qui pointe dans une mémoire la liste des paramètres de configuration dédiés à la ligne.

4. Routeur selon l'une quelconque des revendications précédentes, **caractérisé en ce** pour chaque système il existe au moins un paramètre décrivant le type de programme (31, 32, 33) que doit effectuer le programme API(21) de premier niveau, à chaque type de programme correspond un pointeur qui pointe dans une mémoire la liste des paramètres de configuration dédiés au système.

5. Routeur selon l'une quelconque des revendications 3 ou 4, **caractérisé en ce que** les pointeurs et les paramètres de configuration sont stockés dans un fichier de configuration (40).

6. Routeur selon l'une quelconque des revendications précédentes, **caractérisé en ce qu'**un système est un système radar.

7. Routeur selon la revendication 6, **caractérisé en ce que** le programme API (21) de premier niveau exécute un programme d'interface réalisant :
- une supervision des données de réception, pour avertir notamment un système extérieur de gestion que les données ne sont plus reçues ;
- un traitement intégral, exécutant un contrôle de lignes et de réception des données, ou un contrôle d'aptitude à fonctionner.

8. Routeur selon la revendication 7, **caractérisé en ce que** lorsque deux radars redondants sont activés, seulement un seul des deux est opérationnel, le second étant alors contrôlé pour permettre une commutation de ligne du premier vers le second en cas de défaut du premier.

9. Routeur selon l'une quelconque des revendications précédentes, **caractérisé en ce qu'**un système est un appareil périphérique, du type imprimante, écran ou autre.

10. Routeur selon la revendication 9, **caractérisé en ce que** le programme API (21) de premier niveau exécute un programme d'interface réalisant :
- une interrogation d'un équipement externe pour vérifier qu'il est toujours en état de marche et pour connaître son état réel, par exemple dans le cas d'une imprimante pour savoir s'il y a assez de papier ou assez d'encre ;
- une émission et une réception de messages avec un accusé de réception possible et ré-émission en cas d'erreur.

11. Routeur selon l'une quelconque des revendications précédentes, **caractérisé en ce qu'**un système est un centre de surveillance ou de contrôle du trafic aérien.
